(19) Europäisches Patentamt
European Patent Office
Office européen des brevets

(11) Publication number: **0 061 208**
**A1**

# (12) EUROPEAN PATENT APPLICATION

(21) Application number: 82200191.3

(22) Date of filing: 18.02.82

(51) Int. Cl.³: A 01 N 25/02
A 01 N 53/00, A 61 K 9/08

(30) Priority: 16.03.81 GB 8108147

(43) Date of publication of application:
29.09.82 Bulletin 82/39

(84) Designated Contracting States:
AT BE CH DE IT LI LU NL SE

(71) Applicant: JANSSEN PHARMACEUTICA N.V.
Turnhoutsebaan 30
B-2340 Beerse(BE)

(72) Inventor: Ballany, John M.
12c Darroch Way
Cumbernauld Scotland(GB)

(72) Inventor: Henderson, David
96 Longholme Road
Lonsdale Grange Carlisle(GB)

## (54) Insecticidal control of ectoparasites.

(57) A pour-on or spot-on method of eradicating or controlling ectoparasites and myiasis in non-human animals by the direct application of an ectoparasiticidal amount of a pyrethroid, having the formula

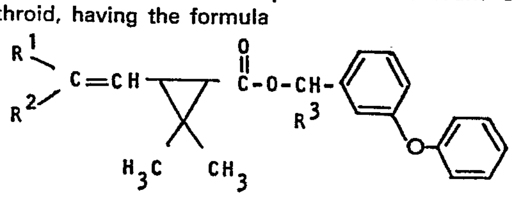

or a stereochemically isomeric form thereof, wherein:
$R^1$ and $R^2$ are, each independently, selected from the group consisting of fluoro, chloro, bromo and iodo; and
$R^3$ is a member selected from the group consisting of hydrogen and cyano,
to a specific skin area of the non-human animal, compositions for use in such method and a process of preparing such compositions.

EP 0 061 208 A1

0061208
JAB-367

# INSECTICIDAL CONTROL OF ECTOPARASITES.

## Description of the invention:

Warm-blooded animals, more especially, sheep and cattle, which are valuable sources of food and fabric to man, are subject to infestation by ectoparasites which feed off their host and cause irritation, such as, for example, myiasis, resulting in a reduction of the quantity and the quality of meat and fabric produce.

Various insecticides are used to eradicate ectoparasites or to interfere with the development and/or the reproduction of said ectoparasites.

An important group of insecticides having a good activity against ectoparasites are the natural and synthetic pyrethroids, in which group the synthetic halo-vinyl substituted cyclopropanecarboxylates are especially useful because of their high insecticidal activity and their improved photostability.

These insecticides are topically administered, such as, for example, by dipping or complete body spraying of animals with an aqueous solution or suspension of this insecticide, whereby the whole of the animal body is contacted by the insecticide and hence the ectoparasites living on the animal's body. These topical administration procedures have the disadvantage that a specialized equipment is

required combined with a great volume of insecticidal composition, for the dipping procedure, and that the spraying procedure lacks efficiency.

The insecticides are also systemically administered whereby the insecticide is transmitted within the animal by the circulatory system in the bloodstream so that the ectoparasites which feed off the blood are attacked and killed by consuming said insecticide. Art-known systemic administration procedures are besides the oral and the parenteral administration procedure also the procedure whereby the insecticide is poured or sprayed onto any part of the skin, absorbed by the skin, penetrated through the skin and diffused into the bloodstream. These systemic administration procedures have been shown to be effective against bloodsucking parasites such as, for example, ticks, e.g., Ixodus Ricinus, and keds, e.g., Melophagus Ovinus. Other ectoparasites which do not consume blood are not affected by such systemic administration procedures. Such ectoparasites are, for example, lice, e.g., Damalinia Ovis, which feed on dead skin on the body of the animal.

The present invention relates to a novel pour-on or spot-on method of eradicating or controlling ectoparasites and myiasis in non-human animals by the direct application of an ectoparasiticidal amount of a pyrethroid, having the formula

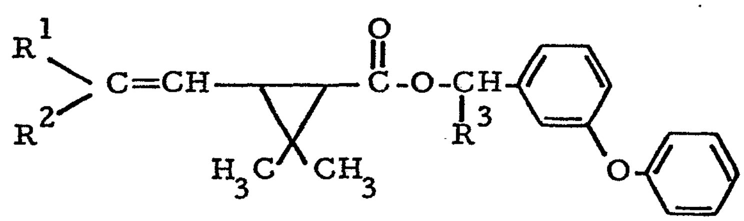

(I)

or a stereochemically isomeric form thereof, wherein:

$R^1$ and $R^2$ are, each independently, selected from the group consisting of fluoro, chloro, bromo and iodo; and

$R^3$ is a member selected from the group consisting of hydrogen and cyano,

to a specific skin area of the non-human animal.

The term "control of ectoparasites" is meant to include the interference with the development and/or the reproduction of said ectoparasites.

The direct application to a specific skin area includes "pour-on" and "spot-on" methods in which the ectoparasiticidal compound in a carrier or a solvent is applied to a specific skin region of an infested animal topically, i.e. locally, by pouring on the formulation or applying small discrete amounts or spots. The preferred area is along the back of the treated animal.

Preferred methods are those wherein the synthetic pyrethroid of formula (I) has a $R^1$ and $R^2$ substituent which are both chloro or bromo.

Especially preferred methods are those wherein the synthetic pyrethroid of formula (I) is selected from the group consisting of

permethrin, being chemically designated as [(3-phenoxyphenyl)methyl] 2-(2,2-dichloroethenyl)-3,3-dimethylcyclopropanecarboxylate;

cypermethrin, being chemically designated as [[cyano(3-phenoxyphenyl)]methyl] 2-(2,2-dichloroethenyl)-3,3-dimethylcyclopropanecarboxylate;

decamethrin, being chemically designated as [(3-phenoxyphenyl)methyl] 2-(2,2-dibromoethenyl)-3,3-dimethylcyclopropanecarboxylate ;

and a stereochemically isomeric form thereof.

Due to the very high ectoparasiticidal activity of cypermethrin the most preferred methods are those wherein the synthetic pyrethroid of formula (I) is cypermethrin or a stereochemically isomeric form thereof.

The synthetic pyrethroids of formula (I) and their preparations are described in British Patent nr. 1,413,491.

The stereochemically isomeric forms of the pyrethroids of formula (I), which may have different degrees in activity, are naturally intended to be embraced within the scope of the present invention.

The present invention relates also to a pour-on or spot-on composition for eradicating or controlling ectoparasites and myiasis in non-human animals, which composition comprises from 1% to 30% by weight of a pyrethroid having the formula (I) or a stereochemically isomeric form thereof in a liquid medium, said medium comprising at least 50% of a solvent consisting of one or more alcohols, having the formula

$$HO-(CH_2-CH_2-O)_m-R \qquad (II)$$

wherein m is the integer 1,2 or 3; and
R is lower alkyl.

As used in the foregoing definition the term lower alkyl is meant to include straight and branched hydrocarbon radicals having from 1 to 6 carbon atoms such as, for example, methyl, ethyl, 1-methylethyl, 1,1-dimethylethyl, propyl, 2-methylpropyl, butyl, pentyl, hexyl and the like.

Suitable alcohols of formula (II) are, for example, 2-methoxyethanol, 2-(2-ethoxyethoxy)ethanol, 2-(2-butoxyethoxy)ethanol and the like.

The alcohols of formula (II) wherein m is 2 combine a good penetration capacity with a relatively high flashpoint, thus enhancing the safety margin, and therefor these alcohols are especially preferred.

Due to its excellent spreading and run-off properties 2-(2-butoxyethoxy)ethanol is the most preferred alcohol.

The amount of the alcohol or alcohols of formula (II) in the medium may vary within rather wide limits, from 50% to 100% by weight of the medium. It has however been found that the incidence of skin irritation shows a tendency to decrease with an increasing content of said alcohol or alcohols. Compositions wherein the medium comprises at least 80% by weight of one or more alcohols of formula (II) are therefor preferred.

Particularly preferred are compositions wherein the medium consists essentially of one or more of said alcohols.

The most preferred compositions are those wherein the medium consists essentially of 2-(2-butoxyethoxy)ethanol.

Although compositions comprising from 1% to 30% by weight of a synthetic pyrethroid of formula (I) are, as such, very suitable for a "pour-on" or "spot-on" administration, said compositions may possibly contain additives of any nature in minor proportions, which additives do not introduce a significant deleterious effect on the skin. Said additives may facilitate the administration to the skin of the animals and/or may be helpful for preparing the desired compositions. Some examples of additives are cited hereinafter.

Minor amounts of aliphatic hydrocarbon mixtures may reduce the surface tension of the compositions and, as such, said aliphatic hydrocarbon mixtures may prevent an excessive adhesion of the applied compositions to the hair and facilitate their spreading over the skin, resulting in an enhanced resorption of the anthelmintic by the skin.

The presence of minor amounts of one or more dipolar aprotic solvents may enhance the penetration rate of the compositions. Suitable dipolar aprotic solvents are, for example, N,N-dimethylformamide, N,N-dimethylacetamide, dimethyl sulfoxide, N-methyl-2-pyrrolidone and the like.

The compositions may also contain other additives such as, for example, substances the taste of which deters animals from licking the applied compositions off the animals treated, pigments making it possible to recognize the treated animals and the like.

Besides a synthetic pyrethroid of formula (I), one or more alcohols of formula (II) and, possibly, suitable additives the compositions of the present invention may also contain other pharmaceutically active compounds such as, for example, other substances with insecticidal and/or anthelmintic properties.

The compounds may be administered within the range of 0.1 to 500 mg/kg body weight and a preferred range is between 1 and 50 mg/kg.

In consideration of the art-known methods of application of the synthetic pyrethroids and the failure to completely eradicate lice, application to a louse-infested animal at a considerable distance from the living lice in accordance with this invention was known to be completely ineffective. We have surprisingly found that, on the contrary, ectoparasites, including lice such as, for example, Damalinia Ovis, are killed and completely eradicated from sheep and cattle by a single pour-on or spot-on application along the animal's back.

The efficacy of the ectoparasiticidal method and compositions of the present invention is illustrate by the following in-vivo experiment:

4 moderately louse-infested sheep were given a single pour-on application of a solution comprising 5% by weight of cypermetrin in 2-(2-butoxyethoxy)ethanol.
The louse infestation was evaluated after 1, 2, 3, 4 and 6.5 weeks.
The evaluation of the louse-infestation is illustrated in table 1 wherein

+ means that numphs or adults were detected, and

- means that no live lice were found.

Table 1 shows also the body weight of the treated sheeps, the dose (in mg/kg) and the total volume applied along the back of the sheep.

Table 1

| Sheep no. | Body weight (kg) | Dose mg/kg | total volume (ml) | weeks | | | | |
|---|---|---|---|---|---|---|---|---|
| | | | | 1 | 2 | 3 | 4 | 6.5 |
| 1 | 37.5 | 10 | 7.5 | + | + | + | + | - |
| 2 | 32.5 | 10 | 6.5 | - | - | - | - | - |
| 3 | 36 | 20 | 15 | - | - | - | - | - |
| 4 | 37.5 | 20 | 15 | - | - | - | - | - |

The insecticidal activity of the compounds used in accordance with the invention is not regarded as 100% systemic. Although a proportion of the compound may penetrate through the skin and diffuse into the bloodstream it is impossible to attribute the parasiticidal activity completely to its systemic activity because a number of ectoparasites, such as, for example, lice, do not depend on the animal's blood for food.

The residue patterns of insecticide in the blood and tissue do not correspond with a systemic bloodstream effect lasting more than a few days and our experiments prove that the eradication process takes a matter of weeks.

There are many advantages in using the method of this invention. In comparison with the systemic administration procedure the method of the present invention has the advantage that not only blood-sucking ectoparasites are effected but also ectoparasites which do not depend on the animal's blood for food such as, for example, ectoparasites which feed on dead skin, e.g., lice and the like. In comparison with the topical administration procedure the method of the present invention is more efficient because it is not necessary to contact the ectoparasites living on the animal's body by the insecticide.

Additional advantages are:

- direct application to the skin is an easy method to adopt by the user;
- less compound is required than in the total immersion dip or complete body spray;
- a ready made formulation requiring no subsequent dilution can be prepared;
- dosage rates can be accurately measured; and
- a single pour-on application results in eradication of all ectoparasites.

Although the hereinabove described compositions and methods are useful for eradicating or controlling ectoparasites in all non-human animals, in general they are especially preferred for the treatment of cattle and sheep.

The following examples are intended to illustrate and not to limit the scope of the present invention.

Example I

10 gram of cypermethrin and 50 grams of 2-(2-butoxyethoxy)-ethanol are mixed intensively. The thus obtained mixture is diluted with 140 grams of 2-(2-butoxyethoxy)ethanol.

Example II

Following the procedure described in Example I the following compositions are also prepared:

Composition 1: 10 grams of cypermethrin and
90 grams of 2-(2-butoxyethoxy)ethanol.

Composition 2: 25 grams of cypermethrin and
75 grams of 2-(2-butoxyethoxy)ethanol.

Composition 3: 30 grams of cypermethrin and
70 grams of 2-(2-butoxyethoxy)ethanol.

What we claim is:

1. A pour-on or spot-on method of eradicating or controlling ectoparasites and myiasis in non-human animals by the direct application of an ectoparasiticidal amount of a pyrethroid, having the formula

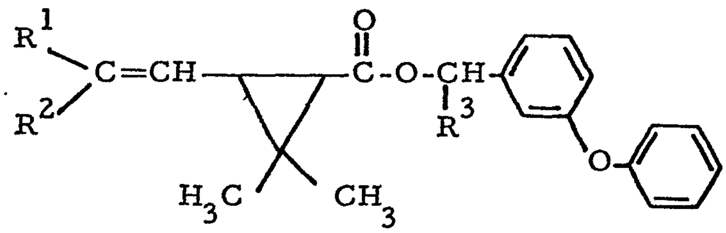

(I)

or a stereochemically isomeric form thereof, wherein:

$R^1$ and $R^2$ are, each independently, selected from the group consisting of fluoro, chloro, bromo and iodo; and

$R^3$ is a member selected from the group consisting of hydrogen and cyano,

to a specific skin area of the non-human animal.

2. A pour-on or spot-on method according to claim 1 wherein $R^1$ and $R^2$ are both chloro or bromo.

3. A pour-on or spot-on method according to claim 1 wherein the pyrethroid is permetrin, cypermetrin, decamethrin or a stereochemically isomeric form thereof.

4. A pour-on or spot-on method according to claim 1 wherein the pyrethroid is cypermethrin or a stereochemically isomeric form thereof.

5. A pour-on or spot-on composition for eradicating or controlling ectoparasites and myiasis in non-human animals, said composition comprising from 1% to 30% by weight of a pyrethroid, having the formula

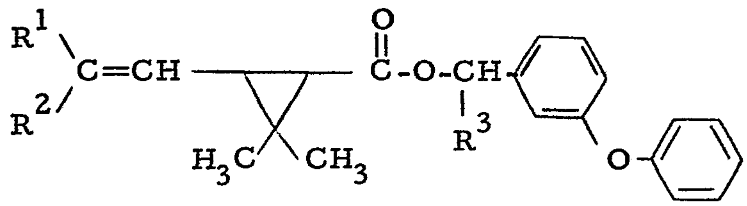

(I)

or a stereochemically isomeric form thereof, in a liquid medium, said medium comprising at least 50% of a solvent consisting of one or more alcohols, having the formula

$$HO\text{-}(CH_2\text{-}CH_2\text{-}O)_m\text{-}R \qquad (II)$$

wherein m is the integer 1, 2 or 3; and
R is lower alkyl.

6. A pour-on or spot-on composition for eradicating or controlling ectoparasites and myiasis in non-human animals, said composition comprising from 1 to 30% by weight of cypermethrin or a stereochemically isomeric form thereof in a liquid medium, said medium comprising at least 50% by weight of 2-(2-butoxyethoxy)ethanol.

7. A pour-on or spot-on composition according to claim 14 wherein said medium comprises at least 80% by weight of 2-(2-butoxyethoxy)ethanol.

8. A pour-on or spot-on composition according to claim 14 wherein said medium essentially consists of 2-(2-butoxyethoxy)-ethanol.

9. A method of preparing a pour-on or spot-on composition for eradicating or controlling ectoparasites and myiasis in non-human animals, <u>characterized</u> in that from 1 to 30 parts by weight of a pyrethroid of formula (I) as defined in claim 1 or a stereochemically isomeric form thereof are intimately mixed with 70 to 99 parts by weight of a liquid medium, said medium comprising at least 50% of a solvent consisting of one or more alcohols having the formula (II) as defined in claim 5.

10. A method of preparing a pour-on or spot-on composition for eradicating or controlling ectoparasites and myiasis in non-human animals, characterized in that form 1 to 30 parts by weight of cypermethrin or a stereochemically isomeric form thereof are intimately mixed with a liquid medium said medium comprising at least 50% of 2-(2-butoxyethoxy)ethanol.

**0061208**

European Patent Office

# EUROPEAN SEARCH REPORT

Application number

EP 82 20 0191

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | BIOLOGICAL ABSTRACTS, vol. 71, no. 8, August 1981, page 5397, no. 51477, Philadelphia (USA); D.J.MADDER et al.: "Effect of permethrin, cypermethrin and chlorpyrifos on louse populations of beef cattle". & PROC. ENTOMOL. SOC. ONT. 110(0): 29-34 1979. --- | 1-4 | A 01 N 25/02<br>A 01 N 53/00<br>A 61 K 9/08 |
| X | US-A-4 020 181 (G.G.BLACKMAN et al.)<br>*Column 2, lines 4-20* --- | 1-4 | |
| X | GB-A-2 002 635 (FUMAKILLA)<br>*Page 2, line 20; page 3, line 10* --- | 5-10 | |
| E | EP-A-0 045 424 (BAYER)<br>*Claims 1,6,8-10* --- | 1-10 | TECHNICAL FIELDS SEARCHED (Int. Cl. 3) |
| E | EP-A-0 050 335 (WELLCOME)<br>*Claims 1-6,8,10* ----- | 1-4 | A 01 N<br>A 61 K |

The present search report has been drawn up for all claims

| Place of search | Date of completion of the search | Examiner |
|---|---|---|
| THE HAGUE | 02-07-1982 | DECORTE D. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82